# FASCICULE DE BREVET EUROPEEN

(11) **EP 0 764 791 B1**
(45) Date de publication et mention de la délivrance du brevet: **14.11.2001**
(21) Numéro de dépôt: 96401509.3
(22) Date de dépôt: 09.07.1996
(51) Int. Cl.: F16C 19/40, F16C 19/34, F16C 33/372

(54) **Séparateur d'éléments roulants pour roulement ou palier à rouleaux sans cage**
Distanzstück für Wälzkörper eines Lagers oder Rollenlager ohne Käfig
Spacing body for rolling markers for a bearing or roller bearing without cage

(30) Priorité: 22.09.1995 FR 9511135
(43) Date de publication de la demande: 26.03.1997
(73) Titulaire: S.N.R. ROULEMENTS, 74010 Annecy Cédex (FR)
(72) Inventeur: Faramaz, Michel, 74290 Menthon-Saint-Bernard (FR)
(74) Mandataire: Fernandez, Francis Lionel

(56) Documents cités:
- DE-A- 3 732 501
- FR-A- 2 071 234
- US-A- 3 275 391

## Description

L'invention concerne un séparateur d'éléments roulants pour un roulement ou un palier sans cage à rouleaux.

L'invention concerne plus particulièrement un séparateur pour un roulement ou un palier sans cage à rouleaux croisés dans lequel chacune des deux bagues ou équivalents possède deux chemins de roulement concentriques formant entre eux un angle droit rentrant. Un exemple d'un tel roulement est décrit dans la publication FR-2 506 410. Les axes de deux rouleaux successifs sont inclinés l'un par rapport à l'autre à angle droit.

La publication FR-2 343 922 décrit un élément séparateur d'une seule pièce pour roulement, comprenant une surface périphérique de forme appropriée pour épouser la section du couloir de circulation des corps roulants, divisé par une cloison transversale et réalisé principalement en matière plastique. Ce séparateur possède une structure alvéolaire constituée de nervures et d'entretoises qui lui permettent de transmettre une force prédéterminée dans la direction axiale et de conserver sensiblement son contour extérieur et sa configuration extérieure jusqu'au moment ou les corps roulants adjacents entrent en contact entre eux. Bien que la publication FR-2 343 922 mentionne l'application d'un tel élément séparateur à un roulement à rouleaux, il n'est fait aucune mention d'une adaptation spécifique destinée à résoudre les problèmes propres aux roulements à rouleaux croisés. Or, dans de tels roulements, les séparateurs possèdent, de manière conventionnelle, sur chacune de leurs deux faces latérales, une seule surface cylindrique concave, les axes des deux surfaces cylindriques formant entre eux un angle droit. De tels séparateurs dissymétriques peuvent présenter des problèmes lors du montage du roulement. En effet, si le positionnement n'est pas correct, il y a un risque que la surface concave ne soit pas située en regard du rouleau avec lequel elle doit coopérer.

L'invention a pour objet un séparateur favorisant un auto-positionnement lors de son montage au sein d'un roulement ou d'un palier à rouleaux.

Selon l'invention, le séparateur de corps roulants pour roulement ou palier sans cage à rouleaux croisés dans lequel deux faces latérales tournées respectivement vers deux rouleaux successifs portent des surfaces cylindriques concaves de même rayon, chacune desdites surfaces débouchant selon son axe en deux points de la périphérie dudit séparateur, est caractérisé en ce que chacune desdites faces latérales porte deux surfaces cylindriques concaves dont les axes sont perpendiculaires entre eux et que lesdites surfaces cylindriques concaves possèdent la même orientation angulaire d'une face latérale à l'autre.

Selon une autre caractéristique de l'invention, les deux faces latérales du séparateur sont réunies par quatre faces transversales planes et perpendiculaires deux à deux à l'axe de l'une des surfaces cylindriques concaves.

Selon une autre caractéristique de l'invention, le séparateur comporte, sur au moins une de ses faces latérales, une cavité chevauchant chacune des surfaces cylindriques concaves situées sur ladite face latérale.

L'utilisation d'un tel séparateur au sein d'un roulement ou palier à rouleaux croisés permet de minimiser les risques d'erreur lors du montage. En effet, le séparateur comporte alors, sur chaque face latérale, deux surfaces cylindriques concaves d'axes perpendiculaires entre eux. Dans ce cas, toute rotation de 90° du séparateur dans un plan parallèle aux axes desdites surfaces cylindriques concaves conservera une position de montage correcte puisque chaque rouleau aura encore en regard, après cette rotation, une surface cylindrique concave alignée avec lui.

Avantageusement, un tel séparateur reste utilisable au sein de roulements à rouleaux plats puisque les surfaces cylindriques concaves possèdent la même orientation angulaire d'une face latérale à l'autre.

D'autres caractéristiques et avantages de l'invention apparaîtront à la lecture de la description d'un exemple de réalisation du séparateur selon l'invention, en référence au dessin dans lequel :
- la figure 1 est une vue en coupe partielle d'un roulement sans cage à rouleaux croisés.
- la figure 2 est une vue en perspective d'un séparateur conventionnel,
- la figure 3 est une vue en perspective d'un exemple de séparateur selon l'invention.

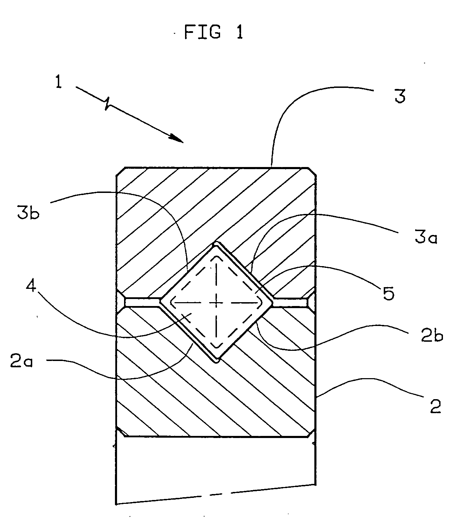

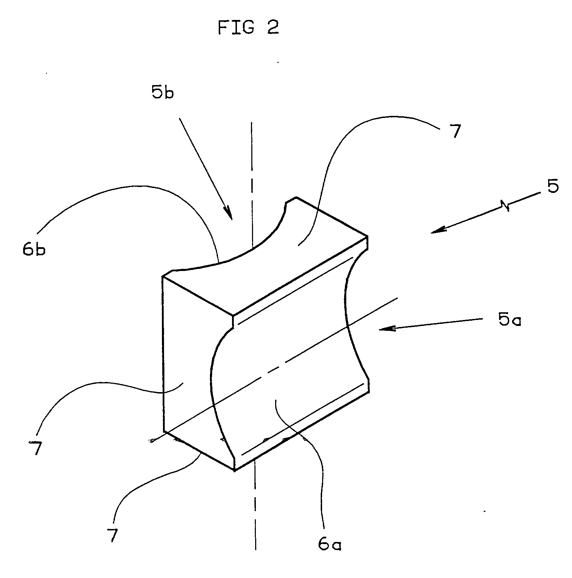

Un roulement 1 sans cage à rouleaux croisés est représenté sur la figure 1. Il comprend une bague inférieure 2 et une bague supérieure 3. La bague inférieure 2 possède sur sa face supérieure deux chemins de roulement 2a et 2b concentriques formant entre eux un angle droit rentrant et la bague supérieure 3 possède, en regard, deux chemins de roulement 3a et 3b concentriques formant entre eux également un angle droit rentrant. Les rouleaux 4 sont disposés alternativement sur les chemins de roulement 2a et 2b en contact respectivement avec les chemins de roulement 3a et 3b de la bague supérieure 3. Dans un tel roulement 1 dépourvu de cage on intercale entre les rouleaux, de manière conventionnelle, des séparateurs 5 possédant respectivement sur chaque face latérale 5a,5b une seule surface cylindrique concave 6a,6b débouchant selon son axe en deux points de la périphérie dudit séparateur 5, les axes des surfaces cylindriques respectives 6a,6b de chacune des deux faces latérales 5a,5b étant perpendiculaires entre eux. Un exemple de séparateur 5 est représenté sur la figure 2. Dans cet exemple, le séparateur 5 possède respectivement, sur sa face latérale 5b arrière, une surface cylindrique concave 6b d'axe vertical et sur sa face latérale Sa avant une surface cylindrique concave 6a d'axe horizontal. De plus, le séparateur 5 possède une forme générale carrée, chacune des faces transversales planes 7, qui réunissent les deux faces latérales 5a et 5b, étant perpendiculaire à l'axe d'une des surfaces cylindriques concaves 6a ou 6b, la longueur desdites faces transversales 7 étant bien entendu inférieure au diamètre des rouleaux 4 de façon à ce que le roulement 1 puisse fonctionner. Cette forme carrée facilite la mise en place dudit séparateur 5 dans l'angle formé par les chemins de roulement 2a et 2b. Mais elle favorise également, lors du montage, une rotation de 90° malencontreuse du séparateur 5 dans un plan parallèle aux axes de ses deux surfaces cylindriques concaves 6a et 6b. Ces dernières ne seront alors plus parallèles à leurs rouleaux respectifs 4, et le roulement 1 ainsi monté sera défectueux.

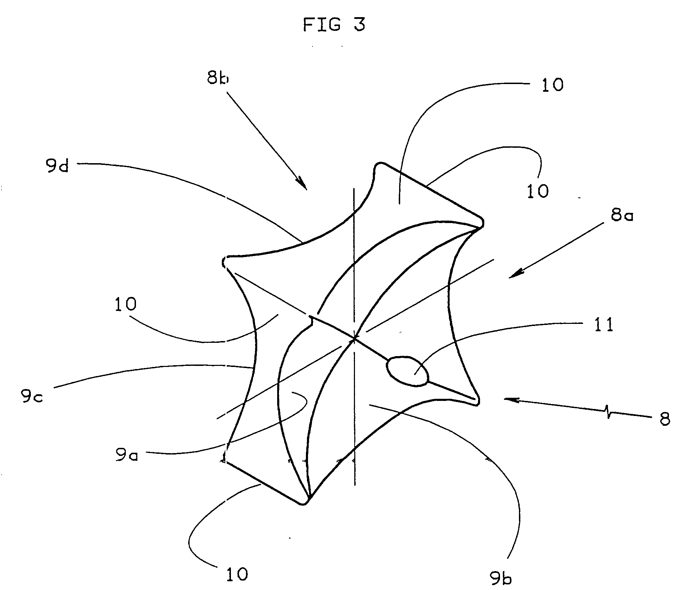

Le séparateur 8 représenté sur la figure 3 permet de pallier cet inconvénient. Il comporte sur chacune de ses faces latérales 8a,8b deux surfaces cylindriques concaves 9a,9b, respectivement 9c,9d. débouchant chacune selon leur axe respectif en deux points de la périphérie dudit séparateur 8. Sur chaque face latérale 8a,8b du séparateur 8, les deux surfaces cylindriques concaves 9a et 9b, respectivement 9c et 9d sont telles que leurs axes respectifs soient perpendiculaires entre eux. Les surfaces cylindriques concaves 9a,9b, respectivement 9c,9d possèdent la même orientation angulaire relative sur l'une 8a et l'autre 8b faces latérales du séparateur 8, c'est à dire que la surface 9a est parallèle à une des surfaces 9c ou 9d. D'autre part, les deux faces latérales 8a,8b sont réunies par quatre faces transversales 10 planes et perpendiculaires deux à deux à l'axe d'une des surfaces cylindriques concaves 9a,9b procurant ainsi au séparateur 8 une forme générale carrée. De la même façon que pour le séparateur 5 conventionnel, ce sont ces faces transversales 10 qui servent au positionnement du séparateur 8 entre les rouleaux 4, sur les chemins de roulement 2a,2b du roulement 1. La longueur desdites faces transversales 10 est bien entendu inférieure au diamètre des rouleaux 4. Ainsi, même en cas de rotation de 90° du séparateur 8 dans un plan parallèle aux axes de ses surfaces cylindriques concaves 9a,9b,9c,9d, il y aura toujours une de celles-ci qui coïncidera avec chacun des deux rouleaux 4 entourant ledit séparateur 8.

Selon une autre variante de l'invention, il est prévu, sur au moins une des deux faces latérales 8a ou 8b du séparateur 8, une cavité 11 chevauchant chacune des surfaces cylindriques concaves 9a,9b ou 9c,9d situées respectivement sur ladite face 8a ou 8b. Cette cavité 11 est destinée à contenir un lubrifiant.

## Revendications

1. Séparateur (8) de corps roulants pour roulement (1) ou palier sans cage à rouleaux (4) croisés dans lequel deux faces latérales (8a,8b) tournées respectivement vers deux rouleaux (4) successifs portent des surfaces cylindriques concaves (9a,9b,9c,9d) de même rayon, chacune desdites surfaces (9a,9b,9c,9d) débouchant selon son axe en deux points de la périphérie dudit séparateur (8), **caractérisé en ce que** chacune desdites faces latérales (8a,8b) porte deux surfaces cylindriques concaves (9a,9b;9c,9d) dont les axes sont perpendiculaires entre eux et que lesdites surfaces (9a,9b;9c,9d) possèdent la même orientation angulaire d'une face latérale (8a) à l'autre (8b).

2. Séparateur (8) selon la revendication 1 **caractérisé en ce que** les deux faces latérales (8a,8b) sont réunies par quatre faces transversales (10) planes et perpendiculaires deux à deux à l'axe de l'une des surfaces cylindriques concaves (9a,9b).

3. Séparateur (8) selon l'une quelconque des revendications 1 ou 2 **caractérisé en ce qu'**il comporte, sur au moins une de ses faces latérales (8a,8b), une cavité (11) chevauchant chacune des surfaces cylindriques concaves (9a,9b;9c,9d) situées sur ladite face latérale (8a,8b).

## Patentansprüche

1. Distanzstück (8) für Wälzkörper für ein Wälzlager (1) oder Rollenlager ohne Käfig mit gekreuzten Rollen (4), bei dem zwei Seitenflächen (8a, 8b), die jeweils zwei aufeinanderfolgenden Rollen (4) zugewendet sind, konkave zylindrische Oberflächen (9a, 9b, 9c, 9d) von gleichem Radius tragen, wobei jede dieser Oberflächen (9a, 9b, 9c, 9d) entsprechend ihrer Achse an zwei Punkten des Umfangs des Distanzstückes (8) mündet, **dadurch gekennzeichnet, daß** jede der Seitenflächen (8a, 8b) zwei konkave zylindrische Oberflächen (9a, 9b; 9c, 9d) trägt, deren Achsen senkrecht zueinander sind, und daß diese Oberflächen (9a, 9b; 9c, 9d) von einer Seitenfläche (8a) zur anderen (8b) die gleiche Winkelorientierung aufweisen.

2. Distanzstück (8) nach Anspruch 1, **dadurch gekennzeichnet, daß** die beiden Seitenflächen (8a, 8b) durch vier Querflächen (10) miteinander verbunden sind, die eben und paarweise senkrecht zur Achse einer der konkaven zylindrischen Oberflächen (9a, 9b) sind.

3. Distanzstück (8) nach einem der Ansprüche 1 oder 2, **dadurch gekennzeichnet, daß** es auf wenigstens einer seiner Seitenflächen (8a, 8b) einen Hohlraum (11) aufweist, der jede der konkaven zylindrischen Oberflächen (9a, 9b; 9c, 9d), die sich auf dieser Seitenfläche (8a, 8b) befinden, überlappt.

## Claims

1. Separator (8) for rolling bodies for a bearing (1) or cageless bearing with crosswise rollers (4) in which two lateral faces (8a, 8b) turned respectively towards two successive rollers (4) having concave cylindrical surfaces (9a, 9b; 9c, 9d) leading, according to its axis, into two points of the periphery of said separator (8), **characterised in that** each of said lateral faces (8a, 8b) has two concave cylindrical surfaces (9a, 9b; 9c, 9d), the axes of which are perpendicular to one another and **in that** said surfaces (9a, 9b; 9c, 9d) have the same angular orientation from one lateral face (8a) to the other (8b).

2. Separator (8) according to claim 1, **characterised in that** the two lateral faces (8a, 8b) are joined together by four planar and perpendicular transverse faces (10) two by two to the axis of one of the concave cylindrical surfaces.

3. Separator (8) according to any one of claims 1 or 2, **characterised in that** it comprises, on at least one of its lateral faces (8a, 8b) a cavity (11) overlapping each of the concave cylindrical surfaces (9a, 9b; 9c, 9d) located on said lateral face (8a, 8b).
